# EUROPEAN PATENT SPECIFICATION

(11) **EP 2 441 691 B1**
(45) Date of publication and mention of the grant of the patent: **03.04.2013**
(21) Application number: 11007728.6
(22) Date of filing: 22.09.2011
(51) Int. Cl.: B65B 69/00, B65G 65/23

(54) **Apparatus for inverting container containing material to be packed**
Vorrichtung zum Umkehren eines Behälters welcher Material zum Verpacken enthält
Appareil pour inverser un récipient contenant un matériau à conditionner

(30) Priority: 18.10.2010 JP 2010233265
(43) Date of publication of application: 18.04.2012
(73) Proprietor: Toyo Jidoki Co., Ltd., Tokyo (JP)
(72) Inventor: Tanaka, Namiyoshi, Iwakuni-shi Yamaguchi (JP)
(74) Representative: Leinweber & Zimmermann

(56) References cited:
- DE-C1- 4 109 461
- FR-A1- 2 829 477
- GB-A- 205 447
- GB-A- 900 058
- US-B2- 6 988 865

## Description

### BACKGROUND OF THE INVENTION

### Technical Field

The present invention relates to an apparatus for inverting a container containing a material to be packaged (hereinafter referred to as a "container inverting apparatus") for use in an automatic bag filling and packaging machine for food or other material. More particularly, the present invention relates to a container inverting apparatus arranged as follows. When a material to be packaged, e.g. food, is to be filled into a packaging container, e.g. a packaging bag, the container inverting apparatus inverts a container containing the to-be-packaged material from an upright position to an upsidedown position to allow the material to drop and to be filled into a packaging container placed directly below the material container, and thereafter, discharges the emptied material container to a container recovery line.

### Background Art

Container inverting apparatuses for use in automatic bag filling and packaging machines for food or other material have heretofore been known as disclosed, for example, in Japanese Patent No. 3517009 or Japanese Patent No. 4473060.

In the container inverting apparatuses disclosed in the above-mentioned patent documents, after the container containing a material to be packaged has been inverted to discharge the material from the container, the emptied container is discharged in the direction of the axis of the container as it is inverted (see guide tube 84 and recovery chute 60 in Fig. 1 of Japanese Patent No. 3517009 and container recovery guide 63 in Fig. 1 of Japanese Patent No. 4473060). In these apparatuses, the container slides on a guide member that guides the discharge of the container, and therefore, the frictional resistance between the container and the guide member is large. Accordingly, the container may fail to move smoothly, and the guide member may be clogged with the container. In Japanese Patent No. 3517009, a part of the dropping material to be packaged may adhere to the inner surface of the guide tube, and a layer of material may gradually grow on the guide tube inner surface. This also causes clogging of the guide tube.

There are container inverting apparatuses in which an emptied container is discharged in such a manner as to be turned sideways so as to roll on a guide member, but not in such a manner as to slide in the axial direction of the container, as disclosed in Japanese Examined Patent Publication No. Hei 3-56974 and Japanese Patent Application Publication No. 2003-200902.

The apparatus of Japanese Examined Patent Publication No. Hei 3-56974, however, needs a container pushing device 11 for discharging the container and therefore becomes complicated in structure and increases in product cost unavoidably. In addition, the inversion of the container is performed by rotation of a rotor 12. At this time, the container is inverted while moving from the rotor center position B toward the outer periphery of the rotor. To discharge the emptied container, the rotor further rotates through 180 degrees to reinvert the container back to the upright position. While doing so, the rotor returns the empty container to the previous rotor center position B. Next, a subsequent container containing a material to be packaged is sent to the rotor position B by the container pushing device 11, and at the same time, the empty container is discharged. Accordingly, the operation efficiency is very low.

In the apparatus of Japanese Patent Application Publication No. 2003-200902, the empty container is eventually turned sideways as shown in Fig. 2 of the patent document. However, before being turned sideways, the empty container is slid in the axial direction of the container through a tubular guide 15 so as to be discharged, in the same way as in Japanese Patent No. 3517009. Accordingly, the container may get caught in the tubular guide. In addition, in order for the empty container to turn sideways, the whole container needs to come out of the tubular guide. In other words, the distance between the discharge opening at the lower end of the tubular guide and an overturning member for turning the empty container sideways needs to be at least the length of the container, and hence the fall, i.e. difference in elevation, is large. Accordingly, the container collides with the overturning member violently, giving rise to problems such as generation of noise, damage to the container, and mixing of a broken piece of the container into a packaging bag.

FR 2 829 477 A1 discloses a container inverting apparatus according to the preamble of claim 1. In said container inverting apparatus, box-like containers are seized from below by a rotary lever, rotated and thereby inverted onto rods arranged over a discharge area. From these rods the inverted container is pushed to a container-discharge conveyer by a linear drive.

### SUMMARY OF THE INVENTION

The present invention has been made in view of the above-described problems associated with the related art.
Accordingly, an object of the present invention is to provide a container inverting apparatus that is simple in structure and yet capable of discharging an emptied container reliably, smoothly and efficiently and further capable of reducing noise and damage to containers and of preventing mixing of a contamination into packaging bags as compared to the related art apparatuses.

The present invention provides a container inverting apparatus according to claim 1. It includes a feed conveyor, a separating stopper, a positioning stopper, an inverting device, an overturning member, and a discharge chute. The feed conveyor conveys a row of a plurality of containers containing a material to be packaged toward a terminating end at one end of the conveyor. The separating stopper is movable between an abutting position where the separating stopper abuts against a second container as counted from the head of the row of containers on the feed conveyor to stop movement of the second and following containers and a retract position where the separating stopper retracts from the abutting position to allow movement of the second and following containers. The positioning stopper is provided near the terminating end at one end of the feed conveyor to abut against a container at the head of the row of containers on the feed conveyor to stop movement of the container and to position the container. The inverting device has a holding member disposed near the terminating end at one end of the feed conveyor to hold the container and an inverting mechanism reciprocating the holding member in an angle range of approximately 180 degrees in a vertical plane. The overturning member is disposed to be located in close proximity to the lower end of the container as inverted so that only a one-side portion of the lower end of the container abuts on the overturning member when the container is released from the holding member. The discharge chute has a receiving section receiving the container turned sideways by the overturning member as it is lying sideways. The discharge chute allows the container to be discharged while rolling about the axis of the container as it is lying sideways. The holding member of the inverting device may be disposed above the positioning stopper. The holding member may have a body part configured to abut against the outer periphery of the container at one side of the container and a pressing part capable of advancing toward and retracting from the body part. The pressing part, when advancing, abuts against the outer periphery of the container at a side of the container opposite to the body part to hold the container in cooperation with the body part.
The body part of the holding member may have a shape of a circular arc in plan view that conforms to the outer peripheral surface of the container so that the body part abuts against a forward outer peripheral surface of the container in a container conveying direction. The pressing part may have two pressing pieces each capable of advancing and retracting. The pressing pieces, when advancing, abut against and press a rearward outer peripheral surface of the container in the container conveying direction.
The overturning member may comprise a forked horizontal plate-shaped member having a forked portion with two arms. The forked portion has step portions formed on the upper sides of the distal ends of the arms so that a part of the lower end of the container fits in the step portions when the container is inverted by the inverting device.
The receiving section of the discharge chute may be shaped in a circular arc such that the forward end of the receiving section is lower than the rear end thereof as viewed in a vertical plane extending in a direction in which the container is discharged. The circular arc has a radius larger than the radius of the container.

As has been stated above, the overturning member is disposed directly below the container as inverted, and the discharge chute is disposed next to and slightly below the overturning member. With this simple structure, the container, after being inverted, is allowed to fall down sideways onto the discharge chute and to roll down the chute as it is lying sideways. Accordingly, the container can be discharged reliably, smoothly and efficiently, unlike in the related art apparatus in which the container slides on the discharge chute. In addition, the fall between the container after inversion and the overturning member and the fall between the overturning member and the discharge chute can be made small. Therefore, the impact applied to the container when coming into abutting contact with the overturning member or when falling down onto the discharge chute is very small. Accordingly, it is possible to reduce noise and to prevent damage to the container and mixing of a contamination into packaging bags as compared to the related art apparatus.
As has been stated above, the holding member of the inverting device may comprise a body part and a pressing part that presses the container toward the body part. With this arrangement, the container can be held reliably with a simple structure.
As has been stated above, the body part of the holding member may be provided with an abutting surface abutting along the outer peripheral surface of the container. With this structure, the container can be held by the holding member in plane contact with the outer periphery of the container. Therefore, the grip of the container is very firm, so that the container cannot disengage from the holding member or cannot be displaced when the container is inverted.
As has been stated above, the overturning member may be a forked member having a forked portion with two arms. The forked portion may have step portions provided on the distal ends of the arms so that a part of the lower end of the container fits in the step portions when the container is inverted. With this structure, it is possible to prevent displacement of the container in the overturning direction and to stabilize the attitude of the container when it is overturned.
As has been stated above, the receiving section of the discharge chute may be shaped in a circular arc such that the forward end of the receiving section is lower than the rear end thereof as viewed in a vertical plane extending in a direction in which the container is discharged, and that the circular arc has a radius larger than the radius of the container. This structure allows the container to roll down the discharge chute speedily.

### BRIEF DESCRIPTION OF THE DRAWINGS

Fig. 1 is a front view of a container inverting apparatus according to an embodiment of the present invention, showing a container containing a material to be packaged at the head of a row of containers as it is held by a holding member.
Fig. 2 is a plan view of the container inverting apparatus shown in Fig. 1.
Fig. 3 is a left-hand side view of the container inverting apparatus shown in Fig. 1.

### DETAILED DESCRIPTION OF THE PREFERRED EMBODIMENTS

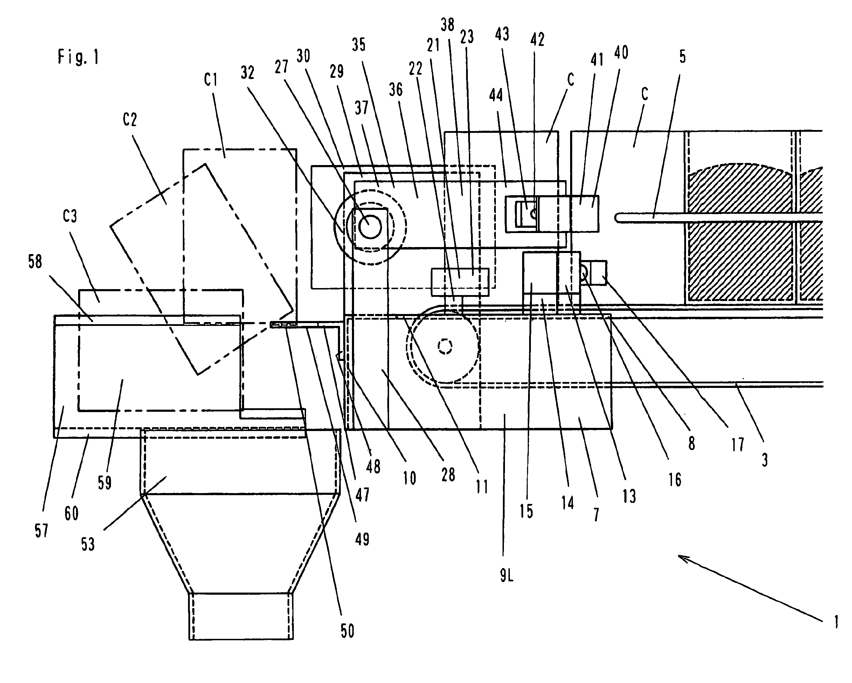

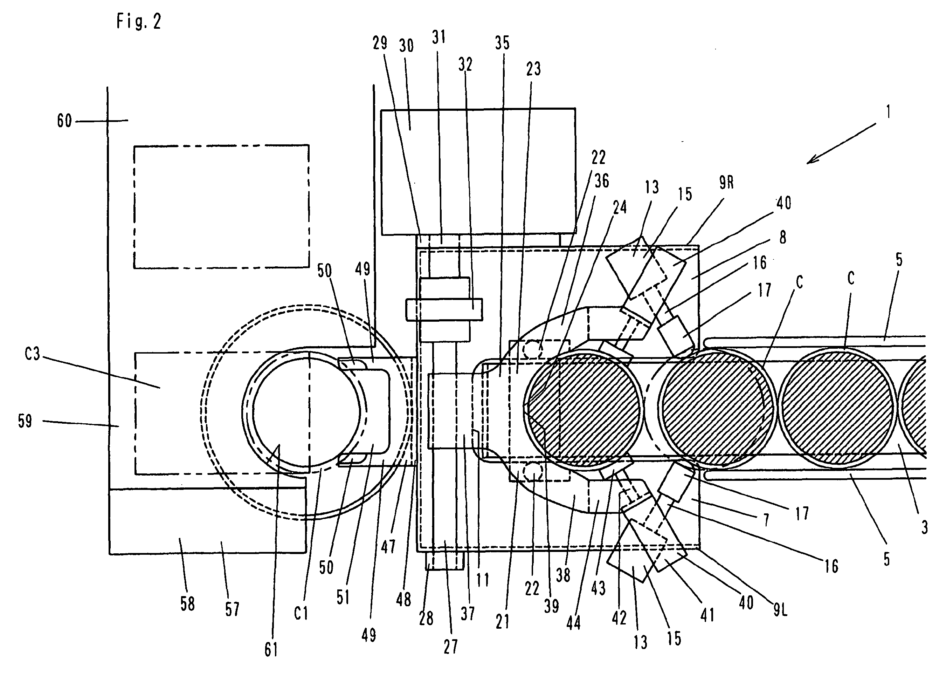

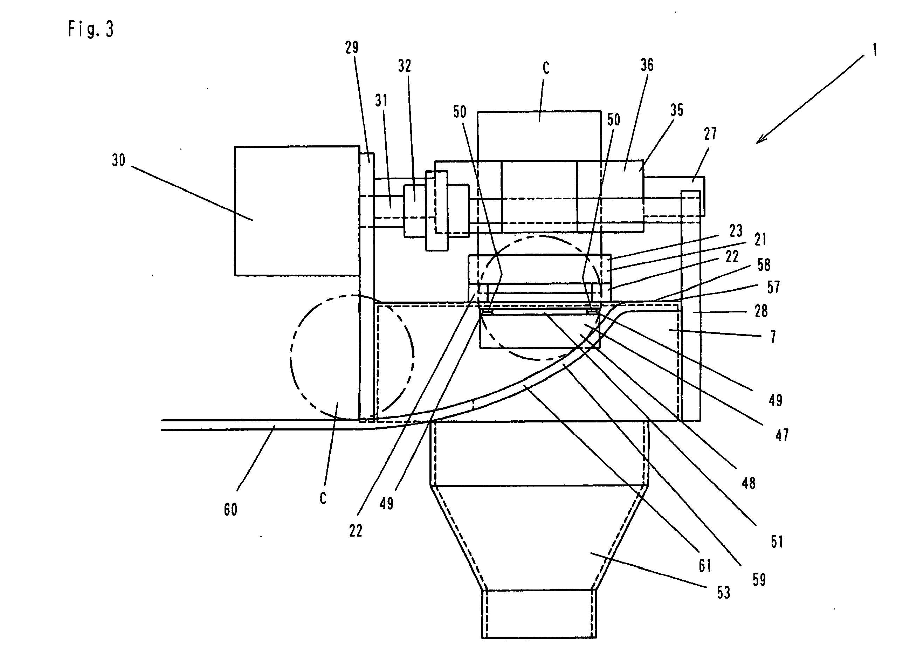

A container inverting apparatus according to an embodiment of the present invention will be explained below with reference to the accompanying drawings. Fig. 1 is a front view of the container inverting apparatus, and Figs. 2 and 3 are a plan view and a left-hand side view, respectively, of the container inverting apparatus.

The container inverting apparatus 1 has a feed conveyor 3 (hereinafter referred to as simply "conveyor 3") successively conveying containers C containing a material to be packaged into packaging containers, e.g. packaging bags. Containers C each having a material loaded thereinto at a previous step (not shown) are placed in a continuous row on the conveyor 3 and conveyed toward a terminating end at one end (left-hand side in Figs. 1 and 2) of the conveyor 3. Guide bars 5 extend along and above the conveyor 3 over a predetermined range to guide the containers C from both sides.

An inverting section frame 7 is attached to a main frame (not shown) of the container inverting apparatus 1. The inverting section frame 7 has a top panel 8, left and right side panels 9L and 9R extending downward from the left and right (upper and lower in Fig. 2) edges of the top panel 8, and a front panel 10 extending downward from the front (left in Fig. 2) edge of the top panel 8. The top panel 8 has a cut portion 11 extending forward from the rear edge thereof to allow the terminating end of the conveyor 3 to extend thereinto.

Separating stoppers 13 are, as shown in Fig. 2, provided at left and right (upper and lower in Fig. 2) positions facing each other across the conveyor 3 to limit the movement of the second and following containers C as counted from the head of the row of containers C on the conveyor 3. Each separating stopper 13 has an air cylinder 15 installed on a mount block 14 secured to the upper side of the top panel 8 of the inverting section frame 7 such that the air cylinder 15 extends obliquely to the direction of travel of the containers C in plan view. Each separating stopper 13 further has an abutting piece 17 attached to the distal end of a rod 16 of the air cylinder 15. The separating stoppers 13 limit the movement of the second and following containers C as counted from the head of the row of containers C on the conveyor 3. More specifically, the containers C are continuously conveyed in a row on the conveyor 3. Until the first container C abuts against a positioning stopper 21, the rods 16 of the air cylinders 15 are kept retracted, so that the abutting pieces 17 are in a retract position where the abutting pieces 17 are positioned out of the path of travel of the containers C so as not to interfere with the movement of the containers C, as will be explained later. However, when the first container C abuts against the positioning stopper 21 (described later) and is stopped from further advancing, the rods 16 extend, and the abutting pieces 17 advance to move to an abutting position where the abutting pieces 17 abut against the second container C having advanced to a position shown by the two-dot chain line in Fig. 2 substantially in contact with the first container C, and push back the second container C to a position shown by the solid line, thereby stopping the second container C from further advancing. The third and following containers C are simultaneously pushed back and stopped. This operation is done to separate the second container C from the first container C to prevent the second container C from interfering with the operation of inverting the first container C (described later). After the inverting operation for the first container C has been completed, the rods 16 are withdrawn to retract the abutting pieces 17, thereby allowing the second and following containers C to be conveyed forward by the conveyor 3 again.

A positioning stopper 21 positions and stops the first container C at a predetermined position. The positioning stopper 21 has leg portions 22 installed on the top panel 8 of the inverting section frame 7 at left and right (upper and lower in Fig. 2) positions, respectively, facing each other across the cut portion 11. The positioning stopper 21 further has an abutting piece 23 installed on the leg portions 22. The abutting piece 23 has an abutting surface 24 on a side thereof facing the container C. The abutting surface 24 is configured to abut against the outer periphery of the container C. More specifically, the abutting surface 24 abuts against the outer peripheral surface of a lower part of the first container C advancing on the conveyor 3 to stop the movement of the container C and thus positions the container C in this position. The abutting surface 24 is shaped in a circular arc having a radius substantially equal to the radius of the containers C. Therefore, the first container C is kept stopped without being displaced not only in the longitudinal direction but also in the lateral direction.

An inverting shaft 27 is rotatably supported at one end (lower end in Fig. 2) thereof by a shaft support plate 28 secured to the outer surface of the left side panel 9L of the inverting section frame 7. The inverting shaft 27 extends laterally over the top panel 8. A motor mount plate 29 is secured to the outer surface of the right side panel 9R of the inverting section frame 7. A servomotor 30 is installed on the motor mount plate 29. The servomotor 30 has an output shaft 31 extending through the motor mount plate 29 and connected to the other end of the inverting shaft 27 through a coupling 32.

A holding member 35 holds a container C. The holding member 35 has a body part 36. The body part 36 has a proximal portion 37 attached to the inverting shaft 27 so as to rotate therewith as one unit. The body part 36 further has a forked portion 38 with two arms extending rightward (in Fig. 2) from the proximal portion 37. The forked portion 38 has an abutting surface 39 formed on the inner side of the root thereof. The abutting surface 39 abuts against the outer periphery of the forward end (in the conveying direction) of the container C stopped and positioned in the predetermined position. The abutting surface 39 is shaped in a circular arc conforming to the outer periphery of the container C. The distal end portions of the arms of the forked portion 38 further extend rightward (in Fig. 2) from a portion thereof where the abutting surface 39 is formed, so as to separate from the first container C. The distal end portions of the arms of the forked portion 38 form air cylinder mount portions 44, respectively.

Each air cylinder mount portion 44 has an air cylinder 41 installed thereon such that a rod 42 is inclined in plan view to the conveying direction of the containers C. The air cylinder 41 forms a pressing part 40 of the holding member 35. Each rod 42 has a pressing piece 43 attached to the distal end thereof. After the first container C has been positioned in abutting contact with the positioning stopper 21 and further the abutting surface 39 of the body part 36 has abutted against the container C, the rods 42 of the air cylinders 41 are extended, and, consequently, the pressing pieces 43 abut against and press the outer peripheral surface of the container C at substantially the opposite side to the abutting surface 39 to firmly hold the container C in cooperation with the body part 36. Then, the inverting shaft 27 rotates through about 180 degrees counterclockwise in Fig. 1 and stops, as will be explained later. At this time, the material to be packaged in the container C is discharged downward. The container C in this state is shown by the two-dot chain line in Fig. 2 and denoted by reference symbol Cl. Next, the rods 42 contract to release the container Cl.

An overturning member 47 is attached to the outer surface of the front panel 10 of the inverting section frame 7. The overturning member 47 turns the container C sideways after the container C has been inverted to be emptied and released from the holding member 35. The overturning member 47 is disposed to be located slightly below and in close proximity to the lower end (opening side) of the inverted and stopped container C. More specifically, the overturning member 47 is provided to turn the container C sideways. Therefore, it is sufficient for the overturning member 47 to be away from the container C to such an extent that the container C, when inverted and stopped, will not collide with the overturning member 47. The distance between the overturning member 47 and the lower end of the container C is preferably from 1 mm to 2 mm, for example. The overturning member 47 has a fitting portion 48 that is secured to the front panel 10 and a forked portion 49 with two arms extending levelly from the fitting portion 48. The arms of the forked portion 49 have step portions 50 defined by cut portions formed on the upper sides of the distal ends thereof. As illustrated in the figures, a part of the opening of the inverted and stopped container C is located within an empty space 51 inside the arms of the forked portion 49, and the opposite ends of the part of the opening of the container C shallowly fit in the step portions 50. In this state, however, the lower end of the container C is not in contact with the bottom of either of the step portions 50. It should be noted that the step portions 50 receive the lower end of the container C and guide the container C to fall down in a predetermined direction; therefore, the depth of the step portions 50 is only required to be of a size sufficient to receive only a lower end portion of slight height of the container C. The empty space 51 is sufficiently wide so as not to interfere with the fall of the to-be-packaged material discharged downward from the container C. When the pressing pieces 43 of the holding member 35 retract from the inverted and stopped container C in the state of being C1 as shown in Fig. 1, the container C is released to slightly fall downward and comes in contact with the bottoms of the step portions 50 at a one-side portion of the opening of the container C as will be seen from Fig. 1. Consequently, the container C tilts as shown by C2 in Fig. 1, turns sideways as shown by C3 and falls down sideways onto a receiving section 59 of a discharge chute 57 (described later).

A guide hopper 53 is located directly below the inverted container C to guide the to-be-packaged material discharged from the container C to enter a packaging container held directly below the guide hopper 53.

A discharge chute 57 is attached to the inverting section frame 7 through brackets (not shown). The discharge chute 57 has an upper flat section 58 extending horizontally at the right-hand side in Fig. 3, a receiving section 59 formed in the shape of a leftward downward sloping circular arc contiguous with the upper flat section 58, and a lower flat section 60 contiguous with the receiving section 59. As shown in the figures, a part of the receiving section 59 close to the upper flat section 58 is located right next to the overturning member 47, and the inverted container C is located directly above the receiving section 59. Accordingly, the container C turned sideways by the overturning member 47 falls down sideways onto the receiving section 59. The container C falling onto the receiving section 59 moves while rolling down from the receiving section 59 to the lower flat section 60 and is discharged to a container recovery line (not shown). It should be noted that the portion of the receiving section 59 close to the upper flat section 58 is located at a height suitable for receiving the container C when turned sideways to a position shown by C3 in Fig. 1 by the overturning member 47. Therefore, the container C can be received with an extremely small impact. It should be noted that the receiving section 59 is provided with a cut portion 61 directly below the inverted container C so as not to interfere with the fall of the to-be-packaged material discharged from the container C.

The following is an explanation of the operation of the container inverting apparatus having the above-described structure. A plurality of containers C containing a material to be packaged are continuously conveyed in a row on the conveyor 3 toward the terminating end at one end of the conveyor 3. At this time, the abutting pieces 17 of the separating stoppers 13 are in their retract position and therefore do not interfere with the movement of the containers C. When the first container C is positioned in abutting contact with the positioning stopper 21, the separating stoppers 13 operate to extend the rods 16. Consequently, the abutting pieces 17 abut against the second container C and pushes back the second and following containers C by a slight distance. Thus, the second container C is separated from the first container C. Meanwhile, the abutting surface 39 of the body part 36 of the holding member 35 abuts against the first container C, and subsequently, the air cylinders 41 of the pressing parts 40 operate to advance the pressing pieces 43. Consequently, the pressing pieces 43 abut against and press the container C to grip the container C in cooperation with the body part 36.

Next, the servomotor 30 operates to rotate the inverting shaft 27 counterclockwise in Fig. 1 through about 180 degrees. The container C turns upside down to assume the two-dot chain line position shown by C 1 in Fig. 2. As a result of this inverting operation, the to-be-packaged material accommodated in the container C is discharged downward and then guided by the guide hopper 53 to be filled into a packaging container (not shown). Meanwhile, at an appropriate timing after starting of the container inverting operation, the rods 16 of the separating stoppers 13 contract to allow the second and following containers C to resume movement. When the container C that is now the first container C abuts against the positioning stopper 21, the separating stoppers 13 operate again to perform the above-described operation.

After the container C has been inverted and stopped momentarily, the air cylinders 41 of the pressing parts 40 of the holding member 35 operate to retract the pressing pieces 43, thereby releasing the container C. The holding member 35 returns to the previous position by the inverting shaft 27 rotating through 180 degrees in the clockwise direction this time. The abutting surface 39 of the body part 36 abuts against the outer periphery of the subsequent container C that has been positioned by the positioning stopper 21, and the pressing parts 40 operate to grip the container C.

Meanwhile, the container C released from the holding member 35 slightly drops to collide with the overturning member 47. Consequently, the container C is turned sideways and falls down sideways onto the receiving section 59 of the discharge chute 57. The container C rolls down the discharge chute 57 as it is lying sideways and is eventually delivered to the container recovery line.
It should be noted that the present invention is not limited to the foregoing embodiment but can be modified in a variety of ways.

## Claims

1. A container inverting apparatus (1) comprising:
a feed conveyer (3) conveying a row of a plurality of containers (C) containing a material to be packaged toward a terminating end at one end of the conveyor;
a positioning stopper (21) provided near said terminating end at one end of said feed conveyer to abut against a container at the head of the row of containers on said feed conveyer to stop movement of said container and to position said container;
an inverting device to invert a container for discharging the material accommodated therein; and
a discharge device allowing the emptied container to be discharged;
**characterized in that**
said container inverting apparatus further comprises a separating stopper (13) movable between an abutting position where the separating stopper abuts against a second container as counted from a head of the row of containers on the feed conveyor to stop movement of said second and following containers and a retract position where the separating stopper retracts from said abutting position to allow movement of said second and following containers;
said inverting device has a holding member (35) disposed near said terminating end at the one end of said feed conveyor to hold said container and an inverting mechanism (27, 30) reciprocating said holding member in an angle range of approximately 180 degrees in a vertical plane;
said container inverting apparatus further comprises an overturning member (47) disposed to be located in close proximity to a lower end of the container as inverted so that only a one-side portion of the lower end of the container abuts on the overturning member when said container is released from said holding member; and
said discharge device comprises a discharge chute (57) having a receiving section (59) receiving the container turned sideways by said overturning member as it is lying sideways, said discharge chute allowing said container to be discharged while rolling about an axis of said container as it is lying sideways.

2. The container inverting apparatus of claim 1, **characterized in that** said holding member (35) of said inverting device is disposed above said positioning stopper (21);
said holding member (35) having:
a body part (36) configured to abut against an outer periphery of said container at one side of said container; and
a pressing part (41) capable of advancing toward and retracting from said body part, said pressing part, when advancing, abutting against the outer periphery of said container at a side of said container opposite to said body part to hold said container in cooperation with said body part.

3. The container inverting apparatus of claim 2, **characterized in that** said body part (36) has a shape of a circular arc in plan view that conforms to an outer peripheral surface of said container so that said body part abuts against a forward outer peripheral surface of said container in a container conveying direction, said pressing part (41) having two pressing pieces (43) each capable of advancing and retracting, said pressing pieces, when advancing, abutting against and pressing a rearward outer peripheral surface of said container in the container conveying direction.

4. The container inverting apparatus of any one of claims 1 to 3, **characterized in that** said overturning member (47) is a forked horizontal plate-shaped member having a forked portion with two arms, said forked portion (49) having step portions (50) formed on upper sides of distal ends of the arms so that a part of the lower end of the container fits in said step portions when said container is inverted by said inverting device.

5. The container inverting apparatus of any one of claims 1 to 4, **characterized in that** the receiving section (59) of said discharge chute (57) is shaped in a circular arc such that a forward end of said receiving section is lower than a rear end thereof as viewed in a vertical plane extending in a direction in which said container is discharged, said circular arc having a radius larger than a radius of said container.

## Patentansprüche

1. Behälterumkehrvorrichtung (1), umfassend:
einen Zuförderer (3), der eine Reihe aus mehreren Behältern (C), die ein zu verpackendes Gut enthalten, in Richtung eines Abschlussendes an einem Ende des Förderers fördert;
einen Positionieranschlag (21), der nahe dem Abschlussende an einem Ende des Zuförderers vorgesehen ist, um in Anlage gegen einen Behälter am Kopfende der Behälterreihe auf dem Zuförderer zu gelangen, um die Bewegung des Behälters zu stoppen und um den Behälter zu positionieren;
eine Umkehreinrichtung, um einen Behälter zwecks Ausleerens des in demselben untergebrachten Guts umzukehren; und
eine Abfördereinrichtung, die ermöglicht, dass der geleerte Behälter abgefördert wird;
**dadurch gekennzeichnet, dass**
die Behälterumkehrvorrichtung weiterhin einen Separieranschlag (13) umfasst, der beweglich ist zwischen einer Anlageposition, in der der Separieranschlag in Anlage gegen einen, gemäß Zählung ab einem Kopfende der Behälterreihe auf dem Zuförderer, zweiten Behälter gelangt, um die Bewegung des zweiten und der folgenden Behälter zu stoppen, und einer Rückzugsposition, in die sich der Separieranschlag aus der Anlageposition zurückzieht, um die Bewegung des zweiten und der folgenden Behälter zuzulassen;
die Umkehreinrichtung ein Halteelement (35) aufweist, das nahe dem Abschlussende an dem einen Ende des Zuförderers eingerichtet ist, um den Behälter zu halten, und einen Umkehrmechanismus (27, 30), der das Halteelement in einem Winkelbereich von etwa 180 Grad in einer vertikalen Ebene hin- und herbewegt;
die Behälterumkehrvorrichtung weiterhin ein Umkippelement (47) umfasst, das eingerichtet ist, um sich in unmittelbarer Nähe zu einem unteren Ende des umgekehrten Behälters zu befinden, so dass lediglich ein einseitiger Abschnitt des unteren Endes des Behälters auf dem Umkippelement in Anlage gelangt, wenn der Behälter vom Halteelement freigegeben wird; und
die Abfördereinrichtung eine Abförderrampe (57) mit einem Aufnahmebereich (59) umfasst, der den durch das Umkippelement seitwärts gekippten Behälter in Seitwärtslage aufnimmt, wobei die Abförderrampe ermöglicht, dass der Behälter abgefördert wird, während er um eine Achse des Behälters in Seitwärtslage rollt.

2. Behälterumkehrvorrichtung nach Anspruch 1, **dadurch gekennzeichnet, dass** das Halteelement (35) der Umkehreinrichtung über dem Positionieranschlag (21) eingerichtet ist;
wobei das Halteelement (35) aufweist:
einen Hauptteil (36), der ausgebildet ist, um in Anlage gegen einen Außenumfang des Behälters an einer Seite des Behälters zu gelangen; und
einen Andrückteil (41), der in der Lage ist, sich in Richtung des Hauptteils vorzubewegen und sich von diesem zurückzuziehen, wobei der Andrückteil, beim Vorbewegen, in Anlage gegen den Außenumfang des Behälters an einer Seite des Behälters gegenüber dem Hauptteil gelangt, um den Behälter im Zusammenspiel mit dem Hauptteil zu halten.

3. Behälterumkehrvorrichtung nach Anspruch 2, **dadurch gekennzeichnet, dass** der Hauptteil (36) bei Draufsicht die Form eines Kreisbogens aufweist, der einer Außenumfangsfläche des Behälters entspricht, so dass der Hauptteil in Anlage gegen eine vordere Außenumfangsfläche des Behälters in Behälterförderrichtung gelangt, wobei der Andrückteil (41) zwei Andrückstücke (43) aufweist, die jeweils in der Lage sind, sich vorzubewegen und sich zurückzuziehen, wobei die Andrückstücke, wenn sie sich vorbewegen, in Anlage gegen eine rückwärtige Außenumfangsfläche des Behälters in Behälterförderrichtung gelangen und auf diese drücken.

4. Behälterumkehrvorrichtung nach einem der Ansprüche 1 bis 3, **dadurch gekennzeichnet, dass** das Umkippelement (47) ein gegabeltes horizontales plattenförmiges Element ist, das einen gegabelten Abschnitt mit zwei Armen aufweist, wobei der gegabelte Abschnitt (49) Abstufungen (50) aufweist, die auf oberen Seiten distaler Enden der Arme ausgebildet sind, so dass ein Teil des unteren Endes des Behälters in die Abstufungen passt, wenn der Behälter von der Umkehreinrichtung umgekehrt ist.

5. Behälterumkehrvorrichtung nach einem der Ansprüche 1 bis 4, **dadurch gekennzeichnet, dass** der Aufnahmebereich (59) der Abförderrampe (57) in einem Kreisbogen so geformt ist, dass ein vorderes Ende des Aufnahmebereichs niedriger als ein rückwärtiges Ende desselben ist bei Betrachtung in einer vertikalen Ebene, die sich in eine Richtung erstreckt, in die der Behälter abgefördert wird, wobei der Kreisbogen einen Radius besitzt, der größer als ein Radius des Behälters ist.

## Revendications

1. Dispositif de retournement de récipient (1) comprenant :
un convoyeur d'alimentation (3) transportant une rangée d'une pluralité de récipients (C) contenant un matériau à emballer vers une extrémité terminale à une extrémité du convoyeur ;
un élément d'arrêt de positionnement (21) placé près de ladite extrémité terminale à une extrémité dudit convoyeur d'alimentation pour buter contre un récipient en tête de la rangée de récipients sur ledit convoyeur d'alimentation pour arrêter le mouvement dudit récipient et pour positionner ledit récipient ;
un dispositif de retournement pour retourner un récipient afin de décharger le matériau qu'il contient ; et
un dispositif d'évacuation permettant au récipient vidé d'être évacué ;
**caractérisé en ce que**
ledit dispositif de retournement de récipient comprend en outre un élément d'arrêt de séparation (13) mobile entre une position de butée où l'élément d'arrêt de séparation bute contre un deuxième récipient, compté depuis la tête de la rangée de récipients sur le convoyeur d'alimentation, pour arrêter le mouvement du deuxième récipient et des récipients suivants et une position rétractée dans laquelle l'élément d'arrêt de séparation se rétracte de ladite position de butée pour permettre le mouvement dudit deuxième récipient et des récipients suivants ;
ledit dispositif de retournement comporte un élément de maintien (35) placé près de ladite extrémité terminale à ladite extrémité du convoyeur d'alimentation pour tenir ledit récipient et un mécanisme de retournement (27, 30) qui fait aller et venir ledit élément de maintien dans une plage angulaire d'environ 180 degrés dans un plan vertical ;
ledit dispositif de retournement de récipient comprend en outre un élément de renversement (47) placé à proximité étroite d'une extrémité inférieure du récipient retourné, de sorte que seule une partie à un côté de l'extrémité inférieure du récipient bute sur l'élément de renversement quand ledit récipient est libéré dudit élément de maintien ;
et
ledit dispositif d'évacuation comprend une goulotte de sortie (57) ayant une section réceptrice (59) qui reçoit le récipient tourné sur le côté par ledit élément de renversement quand il se trouve sur le côté, ladite goulotte de sortie permettant audit récipient d'être évacué tout en tournant autour d'un axe dudit récipient quand il se trouve sur le côté.

2. Dispositif de retournement de récipient selon la revendication 1, **caractérisé en ce que** ledit élément de maintien (35) dudit dispositif de retournement est placé au-dessus dudit élément d'arrêt de positionnement (21) ;
ledit élément de maintien (35) comportant :
une partie corps (36) configurée pour buter contre une périphérie extérieure du récipient sur un côté du récipient ; et
une partie de pressage (41) capable d'avancer vers et de se rétracter de ladite partie corps, ladite partie de pressage, pendant son mouvement d'avance, butant contre la périphérie extérieure dudit récipient sur un côté du récipient opposé à ladite partie corps pour maintenir ledit récipient en coopération avec ladite partie corps.

3. Dispositif de retournement de récipient selon la revendication 2, **caractérisé en ce que** ladite partie corps (36) a la forme d'un arc de cercle en vue en plan qui s'adapte à une surface périphérique extérieure du récipient, de sorte que ladite partie corps bute contre une surface périphérique extérieure avant du récipient dans une direction de transport de récipient, ladite partie de pressage (41) comportant deux pièces de pressage (43) capables chacune d'avancer et de se rétracter, lesdites pièces de pressage, lorsqu'elles avancent, butant contre et poussant une surface périphérique extérieure arrière du récipient dans la direction de transport de récipient.

4. Dispositif de retournement de récipient selon l'une quelconque des revendications 1 à 3, **caractérisé en ce que** ledit élément de renversement (47) est un élément en forme de plaque horizontale fourchue ayant une partie fourchue à deux branches, ladite partie fourchue (49) ayant des parties étagées (50) formées sur les côtés supérieurs des extrémités distales des branches, de sorte qu'une partie de l'extrémité inférieure du récipient se loge dans lesdites parties étagées quand le récipient est retourné par ledit dispositif de retournement.

5. Dispositif de retournement de récipient selon l'une quelconque des revendications 1 à 4, **caractérisé en ce que** la section réceptrice (59) de ladite goulotte de sortie (57) a une forme d'arc de cercle, de sorte qu'une extrémité avant de ladite section réceptrice est inférieure à une extrémité arrière de celle-ci vue dans un plan vertical s'étendant dans une direction dans laquelle ledit récipient est évacué, ledit arc de cercle ayant un rayon plus grand qu'un rayon dudit récipient.
